# EUROPEAN PATENT SPECIFICATION

(11) **EP 3 572 177 B1**
(45) Date of publication and mention of the grant of the patent: **21.04.2021**
(21) Application number: 18173507.7
(22) Date of filing: 22.05.2018
(51) Int. Cl.: B23K 20/10

(54) **METHOD OF BONDING CABLES AND WELDING MACHINE**
VERFAHREN ZUM VERBINDEN VON KABELN UND SCHWEISSMASCHINE
PROCÉDÉ DE LIAISON DE CÂBLES ET MACHINE À SOUDER

(43) Date of publication of application: 27.11.2019
(73) Proprietor: Aptiv Technologies Limited, St. Michael (BB)
(72) Inventor: BENTO, Sérgio J., 2720-534 Amadora (PT); ANUNCIACAO, Filipe F., 2855-664 Corroios (PT); BARRADAS, Pedro Miguel Gomes, 2745-820 Massama (PT)
(74) Representative: Manitz Finsterwald Patent- und Rechtsanwaltspartnerschaft mbB

(56) References cited:
- WO-A1-2014/103807
- DE-A1- 4 116 316
- DE-B3-102013 222 938
- DE-B3-102015 222 013

## Description

The present invention relates to a method of bonding cables one to another using ultrasonic welding according to the preamble of claim 1 and to a welding machine, in particular an ultrasonic welding machine, according to the preamble of claim 9 as substantially known from DE 10 2013 222 938 B3.

Ultrasonic metal welding is used as an alternative for assembling wire harnesses of vehicles, such as cars. Using an ultrasonic welding technique means that a bond which has a comparatively high conductivity while at the same time having a comparatively low resistance can be achieved. The bond can be achieved without melting the metal of the individual wires and/or cables of the wire harness.

The ultrasonic welding technique is used to weld wires or cables one to another using a combination of pressure applied to the components to be combined while subjecting the components to frequencies typically selected in the range of 15 to 40 kHz. The vibrational energy applied thereby disperses surface oxides to create galling on the strands to form a metallurgical bond between the wires respectively conductors of the cables to be bonded one to another.

However, on connecting the cables one to another problems exist with regard to the exact placement of the wires of the individual cables leading to cables that are not aligned correctly and thus bonds that may lack material in the region of the weld arise leading to faulty bonds.

In view of the above it is an object of the present invention to make available a method of bonding cables one to another in which cables can be repeatedly aligned relative to one another and the number of rejected welds is reduced. It is a further object of the present invention to improve the quality of the average bond between cables produced by such a method.

This object is satisfied by a method of bonding cables one to another using ultrasonic welding in accordance with claim 1. Advantageous embodiments of the method are defined in the dependent method claims.

Such a method of bonding cables one to another using ultrasonic welding, comprises the steps of:
- introducing two or more ends of the respective cables into a welding area,
- providing a respective stop at the welding area for each end of the cables to align the two or more ends of the respective cables with respect to one another and a sonotrode, with each stop defining a position of one or more of the ends of the respective cables at the welding area;
- moving an anvil towards the two or more ends of the respective cables to clamp the two or more ends relative to the anvil and the sonotrode; and
- bonding the ends of the respective cables one to another to form a bond by means of ultrasonic welding on use of the sonotrode.

Through use of the stops a correct longitudinal placement of the wires of the cable is ensured at the welding area reducing the number of faulty bonds. Moreover, each side of the splice nugget is perfectly aligned, ensuring that the best possible welding area, i.e. that the area available between wires to be bonded one to another is maximized, to yield improved bonding results in comparison to the prior art.

The provision of the stops also ensures that the wires are arranged over the area of the sonotrode used for the welding, e.g. a tip arranged directly adjacent to the wires. Thereby an optimized positioning and an optimized welding area is achieved reducing the number of faulty bonds and hence the number of rejects on use of the method leading to a significantly more cost-effective method of manufacture of a wire harness having such bonds.

By means of such a method aluminum and copper cables can be cascaded to one another, this was previously not possible due to the ends of the cables frequently missing material in the welding area that caused a collapsing problem on cascading aluminum to cooper welds. The reduction in the risk of damaged splices has been overcome now permitting such a cascading process to take place.

Preferably two cables are introduced into the welding area from opposite sides of the welding area. Thereby a longitudinal placement of the cables can further be improved leading to an improvement of the bonding results achieved.

Advantageously a width of the bond is defined by a spacing between jaws of a gliding jaw, wherein the spacing between the jaws of the gliding jaw is preferably set before the ends of the cables are introduced into the welding area and before the stops are introduced into the welding area. By using a gliding jaw 16 to define a width of the bond, various bonds of various size can be formed in dependence on the material of the cores of the cables and/or their size. The stop can thus be formed as a moveable stop that can be moved to carry out the aligning function and to reflect the changes in spacing between the jaws of the gliding jaws. In this way the position of the stop can also be adapted to the size and/or material of the wires to be bonded one to another.

According to the invention, each stop comprises a plurality of pins that can be moved into and out of engagement with the respective end of the cable and that are preferably arranged in a row to form a curtain of pins. The use of a plurality of individual pins as a stop means that the apparatus can be adapted more easily to different cables of various size.

It is preferred if at least some of the plurality of pins are spring loaded and, during the step of providing the respective stops, one or more of the spring loaded pins engage a part of one of the cables that is not the end of the cable and do not contact, in particular a back plate that is provided to support the cables at, the welding area. A back plate is in this connection preferably provided. The use of spring loaded pins means that the stop can be adapted more easily ins size and shape to reflect the different cables to be welded one to another. Such a back plate can, on the one hand, be used to support the cables and, on the other hand, be used to guide cables to the welding area leading to an enhanced quality of connection between the wires on bonding.

Advantageously the stops are introduced into the welding area and/or removed from the welding area in a direction perpendicular to the direction of introduction of the two cables. Such an arrangement results in an advantageous and simple design of the resultant welding apparatus by means of which the frequency of placement of the cables can be increased leading to the fast and repeated production of high quality bonds.

It is preferred if the two stops are introduced into the welding area in the same direction, preferably wherein the two stops are introduced from a side of the welding area that is disposed opposite to the sonotrode and that optionally comprises comprising the anvil. Such a design further decreases the size of a bonding apparatus and also improves the design of the apparatus with respect to maintenance and use of the components as fewer components can be employed since the respective stops can be driven by the same drive.

Preferably the two stops are introduced into the welding area one after the other, with the first of the two stops being introduced into the welding area before the first of the cables is introduced into the welding area. The stops can thus advantageously be introduced after the spacing between the jaws has been set to improve the positioning of the stops leading to improved bonds. Moreover, the positioning of the stops relative to the ends of the cables can be further improved leading to improved bonds.

The above object is further satisfied by a welding machine in accordance with the independent apparatus claim. Advantageous designs of the welding machine are specified in the claims dependent on the independent apparatus claim.

Such a welding machine, in particular an ultrasonic welding machine, for bonding two or more cables one to another, comprises a welding area, an anvil and a sonotrode, wherein a respective stop is provided at the welding area for each cable, with the stops defining a position of arrangement for ends of the two or more cables relative to the anvil and the sonotrode during the bonding process.

The advantages discussed in the foregoing with respect to the stops and the method of bonding likewise hold true for the corresponding welding machine having such stops.

Advantageously the anvil is a moveable anvil that can be moved to and from the welding area and/or wherein the respective stop is arranged at the anvil and is configured to be moved together with and/or relative to the anvil. In this way the space occupied by the welding machine can be reduced. Moreover, providing the moveable parts at one side of the welding machine also has advantages from a maintenance and handling point of view.

It is preferred if a tip of the sonotrode is arranged directly at the welding area between the two stops at half a spacing between the two stops. This leads to high quality bonds.

Preferably a spacing between the stops defines a width of a connection between the two ends of cables to be bonded one to another. In particular in connection with a moveable stop the welding machine can be adapted in a fast and simple manner to cables of varying size and composition. The welding machine optionally further comprises a gliding jaw, with the spacing being able to be set by jaws of the gliding jaw. In this way the width of the bond can be set for cables of various size and/or composition.

According to the invention, each stop is formed by a plurality of pins that are preferably arranged in a row to form a curtain of pins, wherein at least some of the plurality of pins are in particular spring loaded and configured to move relative to the anvil. The use of a plurality of individual pins as a stop means that the apparatus can be adapted more easily to different cables of various size. In this connection it should be noted that it is preferred if the gliding jaws have receptacles for respective ends of the plurality of pins.

It should further be noted that through the use of spring loaded pins, the stop can, in addition to the aligning function, also carry out a clamping function. The respective stop can in this way be configured as an alignment means for the first of the two cables and as a clamping means for the second of the two cables.

Preferably the respective stop is configured to be moved into the welding area, before and/or during the introduction of the respective cables and indeed advantageously after the spacing has been set by the gliding jaws. In this way the welding machine can be adapted to bond wires of varying size and/or material one to another.

Further embodiments of the invention are described in the following description of the Figures. The invention will be explained in the following in detail by means of embodiments and with reference to the drawing in which is shown:
Fig. 1 a schematic view of a welding area of an ultrasonic welding machine;
Fig. 2 a top view of an ultrasonic welding machine; and
Fig. 3 a further perspective view of the welding machine of Fig. 2.

In the following the same reference numerals will be used for parts having the same or equivalent function. Any statements made having regard to the direction of a component are made relative to the position shown in the drawing and can naturally vary in the actual position of application.

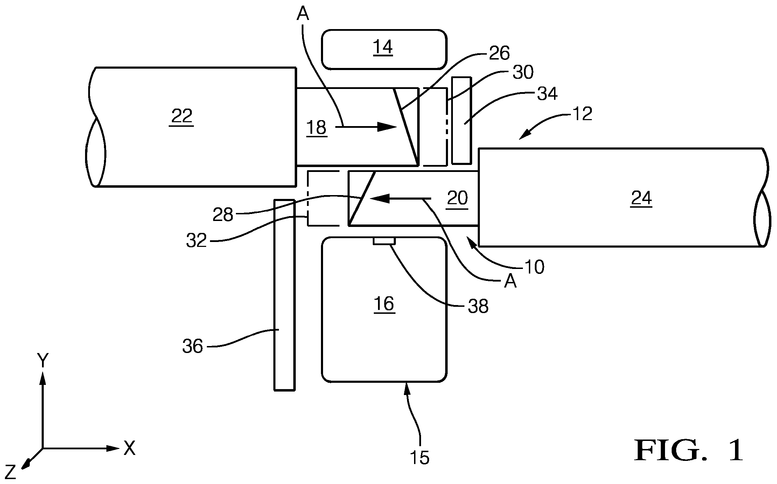

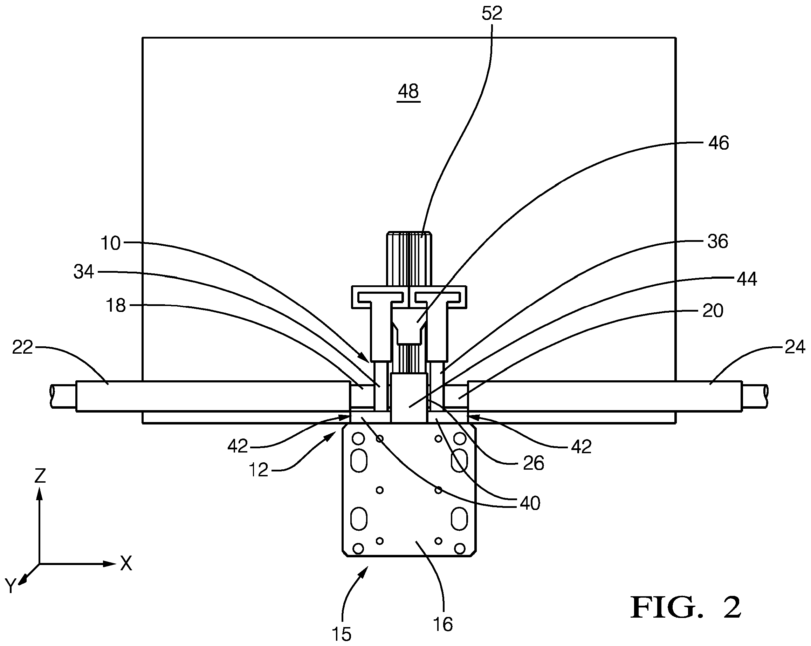

Fig. 1 shows a schematic view of a welding area 10 and of an ultrasonic welding machine 12 (USW machine) arranged about the welding area 10. The basic components of the USW machine 12 are also indicated. The basic components of the USW machine 12 comprise an anvil tip 14 of an anvil 44 (see Fig. 2) that is disposed opposite to a sonotrode 15 at the other side of the welding area 10.

The sonotrode 15 is arranged underneath a set of gliding jaws 16. A spacing between jaws of the gliding jaws 16 defines a width of a bond formed between two cores 18, 20 of two adjacent cables 22, 24. The bond being formed by ultrasonic acoustic vibrations that can locally be applied to the two cores 18, 20 via a tip 38 of the sonotrode.

On use of the apparatus the anvil 44 is moved to come into contact with the gliding jaw and the anvil 44 and the anvil tip 14 exert a pressure on the ends 26, 28 of the cables 22, 24. While the anvil 44 is in contact with the gliding jaw 16 and exerts a pressure on the ends 26, 28 of the cables 22, 24, the sonotrode 15 can be activated to vibrate to form the bond between the ends 26, 28 of the cables 22, 24.

The sonotrode (horn) is part of an ultrasonic stack that comprises a converter or a piezoelectric transducer, and optionally a booster (not shown) as are well known to the skilled person. All elements of the stack are tuned to resonate at the same ultrasonic frequency in order to ensure a good quality weld is achieved between the respective cables, in particular if these are composed of different materials.

The converter is used to convert an electrical signal into a mechanical vibration using the piezo electric effect, by varying the amplitude and frequency of the electrical signal the oscillating frequency of the mechanical vibration can be influenced. An electronic ultrasonic generator is used to deliver a high power electric signal that is used to bring about the piezo effect, with a frequency matching of the resonant frequency of the stack also taking place.

The booster is used to modify the amplitude of the vibration mechanically. It is also used in standard systems to clamp the stack in the press comprising the anvil 14. The sonotrode 15 is used to transmit the mechanical vibration to the cores 18, 20 to be welded one to another.

In the example shown in Fig. 1 the cable 22 comprises an aluminum core 18, whereas the cable 24 comprises a copper core 20. Naturally speaking other materials and alloys can be used as cores 18, 20 of the respective cable 22, 24. The cores 18, 20 can either be formed by a solid conductor or a plurality of individual wires bundled together.

In Fig. 1 the respective end face of the ends 26, 28 of the cores 18, 20 of each cable 22, 24 is beveled. The respective end face of the ends 26, 28 could also be formed perpendicular to the other faces of the respective core 18, 20, or have a different shape. It is the cores 18, 20 that are bonded to one another.

On use of the USW machine 12 each cable 22, 24 is guided to the welding area 10 in the direction indicated by the respective arrow A. In the present instance the ends 26, 28 of the cable 22, 24 are moved towards one another adjacent to the welding area 10 from opposite sides of the welding area 10. By making the ends 26, 28 contact the respective stop 34, 36 ensures that the cores 18, 20 of the cables 22, 24 cover the area beneath which the sonotrode lies and at which the anvil 44 is applied to enhance the bond formed.

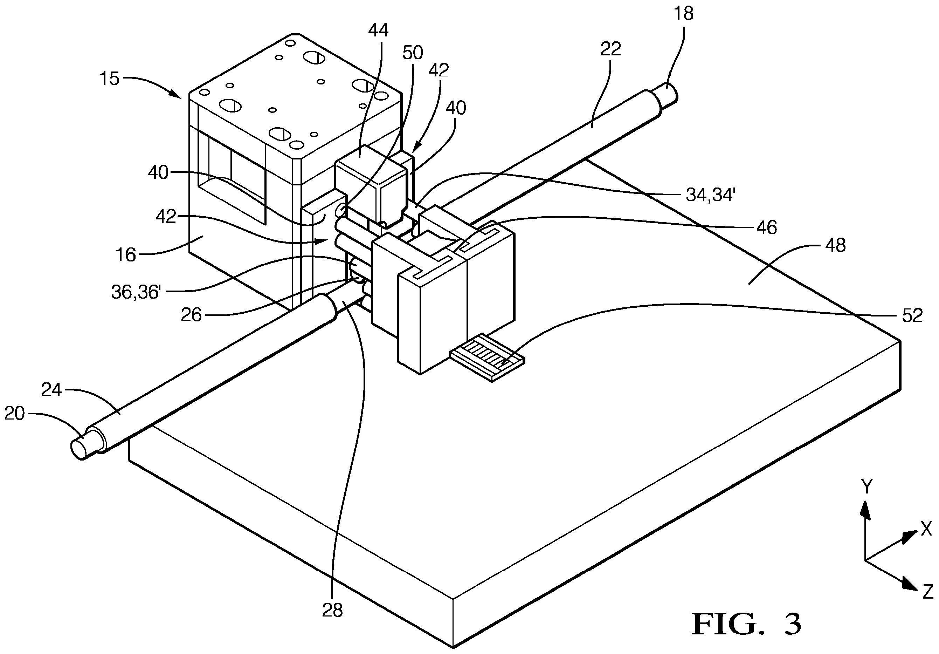

The ends 26, 28 of the cores 18, 20 are guided until they arrive at respective pre-defined positions 30, 32 within the welding area 10. The positions 30, 32 are marked as cable ends in the schematic drawing of Fig. 1. The positions 30, 32 are predefined in accordance with the type of cores 18, 20 to be bonded to one another, i.e. their material and their size, in order to ensure the maximum possible and thereby best welding area 10 available for the respective bond to be formed. Moreover, the position of the welding area 10 is selected such that it lies directly adjacent to the tip 38 of the sonotrode 15. This is done by moving jaws 42 (see Figs. 2 and 3) such that a spacing between the jaws 42 is set and defines a width of the bond to be formed between the cores 18, 20 of the cables 22,24.

In use of the apparatus the positions 30, 32 are defined by two stops 34, 36. Each of the stops 34, 36 is associated with a respective end 26, 28 of the cables 22, 24 and the jaws 42 of the gliding jaws 16. The spatial dimensions X, Y and Z are respectively indicated. The cables 22, 24 are moved in the X-direction on their introduction into the welding area 10.

The stops 34, 36 are introduced into the welding area 10 from a direction perpendicular to the direction of introduction (X-direction) of the two cables 22, 24, namely the Z-direction. It is preferred if the two stops 34, 36 are introduced into the welding area 10 from the same side of the USW machine 12, in the present instance the Z-direction leading into the plane of the drawing of Fig. 1.

The stops 34, 36 are introduced into the welding area 10 before the cables are introduced into the welding area in order to define a spacing between the two stops 34, 36 prior to the bonding process. The position of each stop 34, 36 can be varied in at least the X-direction in dependence on the desired length of the bond formed. The length of the bond formed between the two cores of the cables 22, 24 is defined by the spacing present between the stops 34, 36. Each stop 34, 36 can be formed by a respective pusher, slider, slide bar or the like.

The tip 38 of the sonotrode 15 is arranged directly at the welding area 10 between the two stops 34, 36 at half the spacing between the two stops 34, 36.

Following the introduction of the cables 22, 24 into the welding area 10, the cores 18, 20 are clamped together using a press (not shown) that also moves the anvil 44 towards the welding area 10 in order to create the bond between the two clamped cores 18, 20. The anvil 44 is required to direct the high frequency vibration introduced via the sonotrode 15 arranged beneath the cables towards the interface(s) present between the cores 18, 20 to achieve the bond. In the embodiment shown the anvil 44 is pressed towards the cores 18, 20 and the sonotrode 15 (under the cables).

The system further comprises a controller (not shown) that controls a movement of the anvil 44 relative to the tip 38 of the sonotrode 15. The controller is further configured to control the amount of ultrasonic energy delivered to the cores 18, 20 to be bonded one to another. The controller can further be configured to control a movement of the jaws 42 and of the stops 34, 36 in order to adapt the shape and size of the welding area 10. The controller can further be configured to control a movement of the press to assemble the cores 18, 20 under pressure. In this connection it should be noted that the press can comprise a pneumatic or an electric drive to carry out the pressing function.

Fig. 2 shows a top view of a further embodiment of the USW machine 12. The USW machine comprises a back plate 40 as a support for the cables 22, 24 to be welded. The cables 22, 24 are introduced into the welding area 10 at the back plate 40.

The back plate 40 could be adapted to the specific size of the cables 22, 24 to be bonded one to another. In this connection it should be noted that the back plate 40 could be formed as an exchangeable insert that is exchanged if cables 22, 24 of different diameter are to be bonded using the USW machine 12.

The anvil 44 is a moveable anvil 44 that can be moved in the Z-direction in order to clamp the cores 18, 20 of the cables 22, 24 in the welding area with respect to a base plate 48. For this purpose the anvil 14 is mounted at a slider 44 that can be used to move the anvil 14 to and from the welding area 10 in the Z-direction. The slider 44 can be mounted at a track to improve the accuracy of movement.

The stops 34, 36 are introduced to the welding area 10 prior to the introduction of the anvil 14 and the cables 22, 24. Following the formation of the bond between the cores 18, 20 of the cables 22, 24, the stops 34, 36 are moved before the anvil 44 releases its engagement from the cores 18, 20 bonded to one another.

Fig. 3 shows a further perspective view of the USW machine 12 of Fig. 2. Each stop is formed by a plurality of pins 34', 36' arranged in a row to form a curtain of pins. The pins are spring loaded and if a cable is present at the back plate 40, the spring loaded springs will clamp the cable and will not come into contact with the respective jaw 42 of the gliding jaw 16.

As also indicated in Fig. 3 the jaws 42 respectively comprise apertures 50 that are configured to receive a respective one of the plurality of pins 34', 36'.

To create the bond, the tip 38 of the sonotrode 15 directs an ultrasonic frequency selected in the range of 10 to 50 kHz, preferably in the range of 15 to 40 kHz, towards the anvil 44, so that the two cores 18, 20 are welded together without the addition of a further material. In this connection it should be noted that the side of the tip 38 facing the cores 18, 20 to be bonded one to another can be shaped to reflect the shape of the resultant bond.

The anvil 44 is used to press two cores 18, 20 of two cables 22, 24 towards one another and against a tip 38 of the sonotrode 15 so that ultrasonic acoustic vibrations can locally be applied to the two cores 18, 20 held together under the pressure of the anvil 14 to create a bond between the two cores 18, 20.

On using the respective USW machines 12 of Figs. 1 to 3 a method of bonding cables one to another using ultrasonic welding is carried out. The method comprises the steps of:
- introducing the two ends 26, 28 of the respective cables 22, 24 into the welding area 10,
- providing the two stops 34, 36 at the welding area 10 to align the two ends 26, 28 of the respective cables 22, 24 with respect to one another and the tip 38 of the sonotrode 15, with each stop 34, 36 defining a position of each of the ends 26, 28 of the respective cables 22, 24 at the welding area 10;
- moving the anvil 44 towards the two ends 26, 28 of the respective cables 22, 24 to clamp the two ends 26, 28 between the anvil 14 and relative to the sonotrode 15; and
- bonding the ends 26, 28 one to another to form the bond by means of ultrasonic welding.

### List of reference numerals:

- 10: welding area
- 12: USW machine
- 14: anvil tip
- 15: sonotrode
- 16: gliding jaw
- 18: core
- 20: core
- 22: cable
- 24: cable
- 26: end
- 28: end
- 30: positions
- 32: positions
- 34, 34': stop, curtain of springs
- 36, 36': stop, curtain of springs
- 38: tip
- 40: back plate
- 42: jaws
- 44: anvil
- 46: stop mount
- 48: base plate
- 50: apertures
- 52: track

## Claims

1. A method of bonding cables (22, 24) to one another using ultrasonic welding, the method comprising the steps of:
- introducing two or more ends (26, 28) of the respective cables (22, 24) into a welding area (10),
- providing a respective stop (34, 36) at the welding area (10) for each end (26, 28) of the respective cables (22, 24) to align the two or more ends (26, 28) of the respective cables (22, 24) with respect to one another and a sonotrode (15), with each stop (34, 36) defining a position of one or more of the ends (26, 28) of the respective cables (22, 24) at the welding area (10);
- moving an anvil (44) towards the two or more ends (26, 28) of the respective cables (22, 24) to clamp the two or more ends (26, 28) relative to the anvil (44) and the sonotrode (15); and
- bonding the ends (26, 28) of the respective cables (22, 24) one to another to form a bond by means of ultrasonic welding on use of the sonotrode (15);
**characterized in that**
each stop (34, 36) comprises a plurality of pins (34', 36') that can be moved into and out of engagement with the respective end (26, 28) of the cable (22, 24) and that are preferably arranged in a row to form a curtain of pins (34', 36').

2. The method in accordance with claim 1, wherein two cables (22, 24) are introduced into the welding area (10) from opposite sides of the welding area (10).

3. The method in accordance with claim 1 or claim 2, wherein a width of the bond is defined by a spacing between jaws of a gliding jaw (16), wherein the spacing between the jaws of the gliding jaw (16) is preferably set before the ends (26, 28) of the cables (22, 24) are introduced into the welding area (10) and before the stops (34, 36) are introduced into the welding area (10).

4. The method in accordance with claim 1, wherein at least some of the plurality of pins are spring loaded and, during the step of providing the respective stops (34, 36), one or more of the spring loaded pins engage a part of one of the cables that is not the end of the cable and do not contact, in particular a back plate (40) that is provided to support the cables (22, 24) at, the welding area (10).

5. The method in accordance with one of the preceding claims, wherein the stops (34, 36) are introduced into the welding area (10) and/or removed from the welding area (10) in a direction perpendicular to the direction of introduction of the two cables (22, 24), preferably wherein the two stops (34, 36) are introduced into the welding area (10) in the same direction, preferably wherein the two stops (34, 36) are introduced from a side of the welding area (10) that is disposed opposite to the sonotrode (15) and that optionally comprises the anvil (44).

6. The method in accordance with one of the preceding claims, wherein the two stops (34, 36) are introduced into the welding area (10) one after the other, with the first of the two stops (34, 36) being introduced into the welding area (10) towards the anvil tip (14) before the first of the cables (22, 24) is introduced into the welding area (10).

7. The method in accordance with one of the preceding claims, wherein the two stops (34, 36) are introduced into the welding area (10) one after the other, with the second of the two stops (34, 36) being introduced into the welding area (10) after the first of the two cables (22, 24) is introduced into the welding area (10), but before the second of the two cables is introduced into the welding area (10).

8. The method in accordance with one of the preceding claims, wherein said stops (34, 36) are removed from the welding area (10) after the welding of the cables (22, 24), with the stops (34, 36) preferably being removed before or during the removal of the bonded cables (22, 24).

9. A welding machine (12) for bonding two or more cables (22, 24) one to another, the welding machine (12) comprising a welding area (10), an anvil (44) and a sonotrode (15), wherein a respective stop (34, 36) is provided at the welding area (10) for each cable (22, 24), with the stops (34, 36) defining a position of arrangement for ends (26, 28) of the two or more cables (22, 24) relative to the anvil (44) and the sonotrode (15) during the bonding process;
**characterized in that**
each stop (34, 36) is formed by a plurality of pins (34', 36') that are preferably arranged in a row to form a curtain of pins (34', 36'), wherein at least some of the plurality of pins are in particular spring loaded, and are configured to move relative to the anvil (44)

10. The welding machine (12) in accordance with claim 9, wherein the respective stop (34, 36) is configured to be moved into the welding area (10), before and/or during the introduction of the respective cables (22, 24).

11. The welding machine (12) in accordance with claim 9 or claim 10, wherein the anvil (44) is a moveable anvil (44) that can be moved to and from the welding area (10) and/or wherein the respective stop (34, 36) is arranged at the anvil (44) and is configured to be moved together with and/or relative to the anvil (44).

12. The welding machine (12) in accordance with one of the claims 9 to 11, wherein a tip of the sonotrode (15) is arranged directly at the welding area (10) between the two stops (34, 36) at half a spacing between the two stops (34, 36).

13. The welding machine (12) in accordance with one of the claims 9 to 12, wherein a spacing between the stops (34, 36) defines a width of a connection between the two ends (26, 28) of the cables (22, 24) to be bonded one to another, optionally further comprising a gliding jaw (16), with the spacing being able to be set by jaws of the gliding jaw (16).

## Patentansprüche

1. Verfahren zum Verbinden von Kabeln (22, 24) miteinander unter Verwendung von Ultraschallschweißen, wobei das Verfahren die Schritte umfasst:
- Einführen von zwei oder mehr Enden (26, 28) der jeweiligen Kabel (22, 24) in einen Schweißbereich (10),
- Bereitstellen eines jeweiligen Anschlags (34, 36) an dem Schweißbereich (10) für jedes Ende (26, 28) der jeweiligen Kabel (22, 24), um die zwei oder mehr Enden (26, 28) der jeweiligen Kabel (22, 24) in Bezug zueinander und zu einer Sonotrode (15) auszurichten, wobei jeder Anschlag (34, 36) eine Position von einem oder mehreren der Enden (26, 28) der jeweiligen Kabel (22, 24) an dem Schweißbereich (10) definiert;
- Bewegen eines Ambosses (44) in Richtung der zwei oder mehr Enden (26, 28) der jeweiligen Kabel (22, 24), um die zwei oder mehr Enden (26, 28) relativ zu dem Amboss (44) und der Sonotrode (15) zu klemmen; und
- Verbinden der Enden (26, 28) der jeweiligen Kabel (22, 24) miteinander, um eine Verbindung mittels Ultraschallschweißen bei Verwendung der Sonotrode (15) zu bilden;
**dadurch gekennzeichnet, dass**
jeder Anschlag (34, 36) eine Mehrzahl von Stiften (34', 36') umfasst, die in und außer Eingriff mit dem jeweiligen Ende (26, 28) des Kabels (22, 24) bewegt werden können und die vorzugsweise in einer Reihe angeordnet sind, um einen Vorhang von Stiften (34', 36') zu bilden.

2. Verfahren nach Anspruch 1, wobei zwei Kabel (22, 24) von gegenüberliegenden Seiten des Schweißbereichs (10) in den Schweißbereich (10) eingeführt werden.

3. Verfahren nach einem der Ansprüche 1 oder 2, wobei eine Breite der Verbindung durch einen Abstand zwischen Backen einer Gleitbacke (16) definiert ist, wobei der Abstand zwischen den Backen der Gleitbacke (16) vorzugsweise vor dem Einführen der Enden (26, 28) der Kabel (22, 24) in den Schweißbereich (10) und vor dem Einführen der Anschläge (34, 36) in den Schweißbereich (10) eingestellt wird.

4. Verfahren nach Anspruch 1, wobei zumindest einige der mehreren Stifte federbelastet sind und während des Schritts des Bereitstellens der jeweiligen Anschläge (34, 36) einer oder mehrere der federbelasteten Stifte in einen Teil eines der Kabel eingreifen, der nicht das Ende des Kabels ist und insbesondere nicht mit einer Rückplatte (40) in Kontakt steht, die vorgesehen ist, um die Kabel (22, 24) an dem Schweißbereich (10) zu stützen.

5. Verfahren nach einem der vorhergehenden Ansprüche, wobei die Anschläge (34, 36) in einer Richtung senkrecht zur Einführungsrichtung der beiden Kabel (22, 24) in den Schweißbereich (10) eingeführt und/oder aus dem Schweißbereich (10) entfernt werden, wobei vorzugsweise die beiden Anschläge (34, 36) in gleicher Richtung in den Schweißbereich (10) eingeführt werden, wobei vorzugsweise die beiden Anschläge (34, 36) von einer Seite des Schweißbereichs (10) eingeführt werden, der der Sonotrode (15) gegenüberliegt und der optional den Amboss (44) aufweist.

6. Verfahren nach einem der vorhergehenden Ansprüche, wobei die beiden Anschläge (34, 36) nacheinander in den Schweißbereich (10) eingeführt werden, wobei der erste der beiden Anschläge (34, 36) in Richtung der Amboss-Spitze (14) in den Schweißbereich (10) eingeführt wird, bevor das erste der Kabel (22, 24) in den Schweißbereich (10) eingeführt wird.

7. Verfahren nach einem der vorhergehenden Ansprüche, wobei die beiden Anschläge (34, 36) nacheinander in den Schweißbereich (10) eingebracht werden, wobei der zweite der beiden Anschläge (34, 36) nach dem Einbringen des ersten der beiden Kabel (22, 24) in den Schweißbereich (10), aber vor dem Einbringen des zweiten der beiden Kabel in den Schweißbereich (10) in den Schweißbereich (10) eingebracht wird.

8. Verfahren nach einem der vorhergehenden Ansprüche, wobei die Anschläge (34, 36) nach dem Verschweißen der Kabel (22, 24) aus dem Schweißbereich (10) entfernt werden, wobei die Anschläge (34, 36) vorzugsweise vor oder während der Entfernung der verbundenen Kabel (22, 24) entfernt werden.

9. Schweißmaschine (12) zum Verbinden von zwei oder mehr Kabeln (22, 24) miteinander, wobei die Schweißmaschine (12) einen Schweißbereich (10), einen Amboss (44) und eine Sonotrode (15) aufweist, wobei an dem Schweißbereich (10) für jedes Kabel (22, 24) jeweils ein Anschlag (34, 36) vorgesehen ist, wobei die Anschläge (34, 36) eine Anordnungsposition für Enden (26, 28) der zwei oder mehr Kabel (22, 24) relativ zu dem Amboss (44) und der Sonotrode (15) während des Verbindungsprozesses definieren;
**dadurch gekennzeichnet, dass**
jeder Anschlag (34, 36) durch eine Mehrzahl von Stiften (34', 36') gebildet ist, die vorzugsweise in einer Reihe angeordnet sind, um einen Vorhang von Stiften (34', 36') zu bilden, wobei zumindest einige der Mehrzahl von Stiften insbesondere federbelastet sind und konfiguriert sind, um sich relativ zu dem Amboss (44) zu bewegen.

10. Schweißmaschine (12) nach Anspruch 9, wobei der jeweilige Anschlag (34, 36) derart konfiguriert ist, vor und/oder während der Einführung der jeweiligen Kabel (22, 24) in den Schweißbereich (10) bewegt zu werden.

11. Schweißmaschine (12) nach einem der Ansprüche 9 oder 10, wobei der Amboss (44) ein beweglicher Amboss (44) ist, der in den Schweißbereich (10) hinein und aus diesem heraus bewegt werden kann und/oder wobei der jeweilige Anschlag (34, 36) an dem Amboss (44) angeordnet und derart konfiguriert ist, zusammen mit und/oder relativ zu dem Amboss (44) bewegt zu werden.

12. Schweißmaschine (12) nach einem der Ansprüche 9 bis 11, wobei eine Spitze der Sonotrode (15) direkt an dem Schweißbereich (10) zwischen den beiden Anschlägen (34, 36) im halben Abstand zwischen den beiden Anschlägen (34, 36) angeordnet ist.

13. Schweißmaschine (12) nach einem der Ansprüche 9 bis 12, wobei ein Abstand zwischen den Anschlägen (34, 36) eine Breite einer Verbindung zwischen den beiden Enden (26, 28) der miteinander zu verbindenden Kabel (22, 24) definiert, optional ferner mit einer Gleitbacke (16), wobei der Abstand durch Backen der Gleitbacke (16) einstellbar ist.

## Revendications

1. Procédé pour lier des câbles (22, 24) entre eux en utilisant le soudage par ultrasons, le procédé comprenant les étapes consistant à :
- introduire deux ou plusieurs extrémités (26, 28) des câbles respectifs (22, 24) dans une zone de soudage (10),
- prévoir une butée respective (34, 36) dans la zone de soudage (10) pour chaque extrémité (26, 28) des câbles respectifs (22, 24) afin d'aligner lesdites deux ou plusieurs extrémités (26, 28) des câbles respectifs (22, 24) les unes par rapport aux autres et une sonotrode (15), chaque butée (34, 36) définissant une position d'une ou plusieurs des extrémités (26, 28) des câbles respectifs (22, 24) dans la zone de soudage (10) ;
- déplacer une enclume (44) vers lesdites deux ou plusieurs extrémités (26, 28) des câbles respectifs (22, 24) pour serrer lesdites deux ou plusieurs extrémités (26, 28) par rapport à l'enclume (44) et à la sonotrode (15) ; et
- lier les extrémités (26, 28) des câbles respectifs (22, 24) entre elles pour former une liaison au moyen d'un soudage par ultrasons en utilisant la sonotrode (15) ;
**caractérisé en ce que**
chaque butée (34, 36) comprend une pluralité de broches (34', 36') qui peuvent être mises en et hors prise avec l'extrémité respective (26, 28) du câble (22, 24) et qui sont de préférence disposées en une rangée pour former un rideau de broches (34', 36').

2. Procédé selon la revendication 1, dans lequel deux câbles (22, 24) sont introduits dans la zone de soudage (10) à partir de côtés opposés de la zone de soudage (10).

3. Procédé selon la revendication 1 ou la revendication 2, dans lequel une largeur de la liaison est définie par un espacement entre les mâchoires d'une mâchoire glissante (16), dans lequel l'espacement entre les mâchoires de la mâchoire glissante (16) est de préférence réglé avant que les extrémités (26, 28) des câbles (22, 24) ne soient introduites dans la zone de soudage (10) et avant que les butées (34, 36) ne soient introduites dans la zone de soudage (10).

4. Procédé selon la revendication 1, dans lequel au moins certaines de la pluralité de broches sont chargées par ressort et, pendant l'étape consistant à fournir les butées respectives (34, 36), une ou plusieurs des broches chargées par ressort viennent en prise avec une partie de l'un des câbles qui n'est pas l'extrémité du câble et n'entrent pas en contact avec, en particulier, une plaque arrière (40) qui est prévue pour supporter les câbles (22, 24) dans la zone de soudage (10).

5. Procédé selon l'une des revendications précédentes, dans lequel les butées (34, 36) sont introduites dans la zone de soudage (10) et/ou retirées de la zone de soudage (10) dans une direction perpendiculaire à la direction d'introduction des deux câbles (22, 24), de préférence dans lequel les deux butées (34, 36) sont introduites dans la zone de soudage (10) dans la même direction, de préférence dans lequel les deux butées (34, 36) sont introduites à partir d'un côté de la zone de soudage (10) qui est disposé à l'opposé de la sonotrode (15) et qui comprend éventuellement l'enclume (44).

6. Procédé selon l'une des revendications précédentes, dans lequel les deux butées (34, 36) sont introduites dans la zone de soudage (10) l'une après l'autre, la première des deux butées (34, 36) étant introduite dans la zone de soudage (10) vers la pointe d'enclume (14) avant que le premier des câbles (22, 24) ne soit introduit dans la zone de soudage (10).

7. Procédé selon l'une des revendications précédentes, dans lequel les deux butées (34, 36) sont introduites dans la zone de soudage (10) l'une après l'autre, la deuxième des deux butées (34, 36) étant introduite dans la zone de soudage (10) après que le premier des deux câbles (22, 24) a été introduit dans la zone de soudage (10), mais avant que le deuxième des deux câbles ne soit introduit dans la zone de soudage (10).

8. Procédé selon l'une des revendications précédentes, dans lequel lesdites butées (34, 36) sont retirées de la zone de soudage (10) après le soudage des câbles (22, 24), les butées (34, 36) étant retirées de préférence avant ou pendant le retrait des câbles liés (22, 24).

9. Machine à souder (12) pour lier deux ou plusieurs câbles (22, 24) entre eux, la machine à souder (12) comprenant une zone de soudage (10), une enclume (44) et une sonotrode (15), dans laquelle une butée respective (34, 36) est prévue dans la zone de soudage (10) pour chaque câble (22, 24), les butées (34, 36) définissant une position de disposition des extrémités (26, 28) desdits deux ou plusieurs câbles (22, 24) par rapport à l'enclume (44) et à la sonotrode (15) pendant le processus de liaison ;
**caractérisée en ce que**
chaque butée (34, 36) est formée par une pluralité de broches (34', 36') qui sont de préférence disposées en une rangée pour former un rideau de broches (34', 36'), dans laquelle au moins certaines de la pluralité de broches sont en particulier chargées par ressort et sont configurées pour se déplacer par rapport à l'enclume (44).

10. Machine à souder (12) selon la revendication 9, dans laquelle la butée respective (34, 36) est configurée pour être déplacée dans la zone de soudage (10) avant et/ou pendant l'introduction des câbles respectifs (22, 24).

11. Machine à souder (12) selon la revendication 9 ou la revendication 10, dans laquelle l'enclume (44) est une enclume mobile (44) qui peut être déplacée vers et depuis la zone de soudage (10) et/ou dans laquelle la butée respective (34, 36) est disposée sur l'enclume (44) et est configurée pour être déplacée avec et/ou par rapport à l'enclume (44).

12. Machine à souder (12) selon l'une des revendications 9 à 11, dans laquelle une pointe de la sonotrode (15) est disposée directement dans la zone de soudage (10) entre les deux butées (34, 36) à un demi-espacement entre les deux butées (34, 36).

13. Machine à souder (12) selon l'une des revendications 9 à 12, dans laquelle un espacement entre les butées (34, 36) définit une largeur d'une connexion entre les deux extrémités (26, 28) des câbles (22, 24) à lier entre eux, comprenant en outre éventuellement une mâchoire glissante (16), l'espacement pouvant être réglé par les mâchoires de la mâchoire glissante (16).
